# EUROPEAN PATENT APPLICATION

(11) **EP 0 719 833 A2**
(43) Date of publication of application: **03.07.1996**
(21) Application number: 95308904.2
(22) Date of filing: 07.12.1995
(51) Int. Cl.: C08L 71/12, C08L 23/02, C08K 5/524

(54) **Thermoplastic compositions containing polyphenylene ether resin and polyolefins**

(30) Priority: 30.12.1994 US 366698
(71) Applicant: GENERAL ELECTRIC COMPANY, Schenectady, NY 12345 (US)
(72) Inventor: Lee, Gim Fun Jr., Albany, New York 12203 (US)
(74) Representative: Szary, Anne Catherine

(57) **Abstract**

A rigid moldable thermoplastic resin composition having improved resistance to delamination upon impact and improved impact resistance having in admixture a polyphenylene ether resin, a polyolefin, an essentially non-hydrogenated elastomeric block copolymer and a particular phosphite. The preferred phosphite is tridecyl phosphite.

## Description

### BACKGROUND OF THE INVENTION

This invention is directed to particular rigid moldable thermoplastic polyphenylene ether resin compositions having improved delamination resistance and improved impact resistance. More particularly, the composition of this invention is a polyphenylene ether composition containing a polyolefin, an essentially non-hydrogenated block copolymer, and a particular amount of a phosphite.

Polyphenylene ether resins have become widely accepted in the plastics industry because of their desirable physical and chemical properties, such as high heat resistance and dimensional stability.

Polyphenylene ether resin compositions sometimes include polyolefins, and exhibit improved impact strength and chemical resistance. Reference is therefore made here to U.S. Patent 5,166,264 issued November 24, 1992 (G. Lee, Jr., and J. Yates III), and EP-A-0413972 (G. Lee, Jr.), both of which are assigned to the assignee of the present application.

In U.S. Patent 5,294,655 and EP-A-0467113, there are disclosed combinations of polyphenylene ether resins with certain elastomeric multiblock copolymers and other additives including polyolefins and phosphites, flame retardants, stabilizers, fillers and reinforcing agents. The compositions as reported therein have improved flexibility and elongation. The multiblock copolymers thereof are essentially hydrogenated block copolymers.

While the polyolefins provide increased properties such as impact strength and chemical resistance, there is still a further need to improve impact strength and, in particular, resistance to delamination upon impact. With multi-component systems, particularly compositions containing polyolefins, delamination can be a problem resulting in molded articles being unacceptable in applications where delamination on impact is a concern.

### SUMMARY OF THE INVENTION

It has now been surprisingly discovered that a particular known additive, when employed with polyphenylene ether resin compositions in certain specific amounts, results in a molded article having reduced delamination and improved impact resistance. The discovery of the present invention is a rigid, moldable thermoplastic composition comprising a polyphenylene ether resin, an essentially non-hydrogenated block copolymer, a polyolefin, and a particular phosphite in certain specific proportions. The elastomeric block copolymers may be any of the essentially non-hydrogenated block copolymers or blends of such block copolymers.

The polyolefins that can be employed in the practice of this invention may be any of the known polyolefins.

### DETAILED DESCRIPTION OF THE INVENTION

Polyphenylene ether homopolymer (PPE), employed in the practice of this invention, is a well known class of synthetic polymeric resins as are their methods of preparation. Representative of PPE are those which comprise a plurality of recurring chain structural units having the formula: 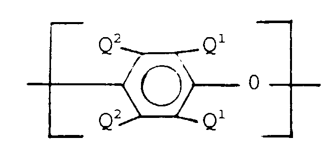 wherein each Q¹ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, halalkyl, hydrocarbonoxy or halohydrocarbcnoxy as defined for Q¹. The term "halogen" as used herein means chlorine, bromine, fluorine, or iodine.

Examples of primary lower alkyl groups are methyl, ethyl, n-propyl, n-butyl, isobutyl, n-amyl, isoamyl, 2- methylbutyl, n-hexyl, 2,3-dimethyl-butyl, 2-, 3-, 4- methylpentyl, and the corresponding heptyl groups. Examples of secondary lower alkyl groups are isopropyl, sec-butyl and 3-pentyl. Preferably, any alkyl radicals are straight chain, rather than branched. Most often, each Q¹ is alkyl or phenyl, especially C¹⁻⁴ alkyl, and each Q² is hydrogen.

Both PPE homopolymer and PPE copolymer are included. Representative homopolymers are those containing, for example, 2,6-dimethyl-1, 4-phenylene ether units. Representative copolymers include random copolymers containing such units in combination with (for example) 2,3,6-trimethyl-1, 4-phenylene ether units. Many suitable random copolymers, as well as homopolymers, are disclosed in the patent literature, see for example Hay, U.S. Patents 3,306,874; 3,306,875 and 3,432,469, Geln Staaloff, U.S. Patents 3,257,357 and 3,257,358; Van Dort, U.S. Patent 3,365,422, Bennett and Cooper, U.S. Patents 3,639,656, 3,642,699, 3,733,299, 3,838,102, 3,661,848, and 4,092,294; Olander, U.S. Patent 4,083,838; White et. al. U.S. Patent 4,806,602; and Brown et. al. U.S. Patent 4,806,297. All of these patents are incorporated herein by reference.

Also included for use in the compositions of the invention are PPE resins containing moieties which modify properties such as molecular weight, melt viscosity and/or impact strength. Such polymers are described in the patent literature and may be prepared by grafting onto the polyphenylene ether in known manner such vinyl monomers as vinylaromatic compounds (e.g., styrene), or such polymers as polystyrenes and like polymers. The product may contain both grafted and/or ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent, provided substantial proportions of free hydroxy groups remain present. Illustrative coupling agents are low molecular weight polycarbonates, quinones, heterocycles, and formals.

The PPE homopolymers employed herein advantageously have a number average molecular weight (Mⁿ) within the range of about 3,000-40,000 and a weight average molecular weight (M^{w}) within the range of about 20,000- 80,000, as determined by gel permeation chromatography. Their intrinsic viscosity is most often in the range of about 0.15 to about 0.6 deciliters/gram (dl/g), as measured in chloroform at 25°C.

The PPE's are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6- dimethyl-1, 4-phenylene) ether, and a poly(2,3,6-trimethyl-1,4 phenylene) ether (wherein each Q¹ and one Q² is methyl and the other Q² is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A class of preferred catalyst systems consists of those containing a copper compound. Such catalysts are disclosed, for example, in U.S. Patents 3,306,874, 3,306,875, 3,914,266, and 4,028,341, all of which are incorporated herein by reference. They are usually combinations of cuprous or cupric ions, halide (i.e., chloride, bromide or iodide) ions and at least one amine.

As another example, coupled PPE polymers may also be used in which the coupling agent is reacted with the hydroxy groups of two PPE chains to produce a higher molecular weight polymer.

In some embodiments, a polystyrene homopolymer or random copolymer resin may be included in the composition. These materials, which are very compatible with the PPE polymer, are known in the art and described, for example, in U.S. Patents 3,383,435; 4,189,411; and 4,242,363, all are incorporated herein by reference. Illustrative resins of this type are polystyrene, polyalphamethyl styrene, polyparamethyl styrene, polychlorostyrene, brominated polymers (e.g., those formed from dibromostyrene monomer), as well as styrene polymers modified by admixture or interpolymerization with natural or synthetic elastomeric materials, e.g., polybutadiene, polyisoprene, butyl rubber, EPDM rubber, and the like. Also contemplated are styrene-acrylonitrile copolymers (SAN), acrylate-styrene-acrylonitrile terpolymers (ASA), and styrene-acrylonitrile-butadiene terpolymers (ABS). Special mention is made of rubber-modified styrene polymers ("high impact polystyrene"), which are frequently used in conjunction with PPE to enhance processing and impact strength and is the preferred rubber-modified styrene to be employed with the PPE homopolymer. These high impact polystyrenes are generally prepared by the copolymer-ization of polybutadiene and a styrene monomer.

The amount of styrene resin, when present (i.e., the amount of homopolymer, copolymer, or mixture as described above), is usually at least 1% by weight and about 1% to about 75% by weight, and preferably, about 2% by weight to about 60% by weight, based on the weight of the entire composition.

The amount of PPE resin employed in the practice of the invention is sufficient to provide a rigid moldable thermoplastic composition. Preferably the PPE employed in an amount of from about 60 parts by weight to about 85 parts by weight based on the total weight of the composition without reinforcing material or fillers.

It will be apparent to those skilled in the art from the foregoing that the PPE contemplated for use in the compositions of the present invention include all those presently known, irrespective of variations in structural units or ancillary chemical features. As used in this invention, PPE resin means PPE homopolymer, PPE copolymer, a blend thereof or a blend of PPE homopolymer and/or copolymer with a styrene polymer as described above.

The particular block copolymer that is employed in the practice of this invention is a A-B or A-B-A' type block copolymer or a blend thereof. They comprise monoalkenyl arene blocks and non-hydrogenated conjugated diene blocks. Suitable A-B type block copolymers are disclosed in for example U.S. Pat. Nos. 3,078,254; 3,402,159; 3,297,793; 3,265,765; and 3,594,452 and UK Patent No. 1,264,741, all herein incorporated by reference. Exemplary of typical species of A-B block copolymers there may be given:
polystyrene-polybutadiene (SBR)
polystyrene-polyisoprene and
poly(alpha-methylstyrene)-polybutadiene.
Such A-B block copolymers are available commercially from a number of sources including Phillips under the trademark Solprene.

Additionally, A-B-A' triblock copolymers and processes for their production are disclosed in U.S. Pat. Nos. 3,149,182; 3,231,635; 3,462,162; 3,287,333; 3,595,942; 3,694,523 and 3,842,029, all incorporated herein by reference.

Exemplary of typical species of triblock copolymers there may be given:
polystyrene-polybutadiene-polystyrene (SBS)
polystyrene-polyisoprene-polystyrene (SIS)
poly(alpha-methylstyrene)-polybutadiene-poly(alpha-methylstyrene) and
poly(alpha-methylstyrene)-polyisoprene-poly(alpha-methystyrene.
A particularly preferred class of such triblock copolymers are available commercially as CARIFLEX® and KRATON D® from Shell.

Preferably the molecular weight of the diene- derived block B may range from about 25,000 to about 150,000 while that of A or A and A' may range from about 3,000 to well in excess of 100,000. The preferred copolymer has about 50% to 85% weight of aromatic compound units and the diene units about 15 to about 50% by weight.

The block copolymers are made by an organolithium initiated polymerization process in hydrocarbon solutions using, for example, butadiene and styrene or other diene and vinyl aromatic monomers as described in the literature.

The level of non-hydrogenated block copolymer present in the composition of this invention depends on a variety of factors, such as the particular type of PPE resin used, the contemplated end use of the product, the level of tensile elongation required in such a product, and the presence or absence of other additives in the composition. In preferred embodiments, the non-hydrogenated elastomeric block copolymer is employed at a level in the range of about 5 parts by weight to about 20 parts by weight, based on the weight of the total weight of the composition without fillers. In more preferred embodiments, the level is about 5 parts by weight to about 15 parts by weight, again based on the total weight of the composition without fillers.

The polyolefins that may be employed in the practice of this invention are polyethylene, polypropylene, polyisobutylene, copolymers of ethylene and propylene, copolymers of ethylene and organic esters such as ethylene vinyl acetate, ethylene ethyl acrylate, ethylene methyl acrylate, and the like, as well as mixtures of any polyolefins. The materials themselves are known in the art, as are methods for making them.

Preferred polyolefins are polyethylene, polypropylene, and polybutylene. Especially preferred are low density polyethylene (LDPE), very low density polyethylene (VLDPE), linear low density polyethylene (LLDPE), medium density polyethylene (MDPE), high density polyethylene (HDPE), high impact (copolymer) polypropylene, or combinations of any of the above.

A suitable level of polyolefin is about 3 parts by weight to about 75 parts by weight, based on the weight of the composition. A preferred level is about 3 parts by weight to about 30 parts by weight, and a most preferred level is about 10 parts by weight to about 15 parts by weight.

Also employed in the practice of this invention are organic phosphates as flame retardants and include phenyl bisdodecyl phosphate, athyldiphenyl phosphate, tri- (nonylphenyl)phosphate, tricresyl phosphate, triphenyl phosphate, alkylated derivatives of triphenyl phosphate, dibutylphenyl phosphate, 2-ethylhexyldiphenyl phosphate, as well as mixtures of any of these materials. Also possible and sometimes preferred for use as di and poly phosphate compounds, such as those described in GB-A-2,043,083 of William Haaf et. al., EP-A-0129825 of V. Abolins, J. Betts, and F. Holub, the contents of which are incorporated herein by reference. Examples of these materials are bisdiphenyl phosphates resorcinol or hydroquinone, as well as mixtures which comprise such phosphates. Other suitable phosphates are taught in U.S. Patent 4,900,769 of V. Abolins et. al., incorporated herein by reference. Triarylphosphates in admixture with alkylated aryl phosphates are often preferred. However, a most preferred phosphate is resorcinol diphosphate. The phosphates may be employed in amounts of 10 to about 25 parts by weight.

The critical feature of the present invention is employing a particular amount of a particular phosphite additive. The phosphite additive employed in the practice of this invention is selected from the group consisting of tridecyl phosphite, diphenylisodecyl phosphite, tristearyl phosphite and bis(2,4 di-t-butylphenye) pentaerythritol diphosphite and mixtures thereof.

The critical amount of the particular phosphite is at least 1 part based on the parts by weight of the composition without fillers, with maximum amount being that which does not effect other properties of the composition, such as impact, flame retardancy, surface quality, etc. Preferably, the amount ranges from about 1 part to about 15 parts by weight, and particularly 2 to about 10 parts by weight.

While the above phosphites are known additives to polymer systems, they are added in small amounts for stabilization purposes. The surprising and unexpected discovery is that when employing the above phosphites in an amount of at least about 1 part by weight, in conjunction with the particular ratios and PPE intrinsic viscosities as set forth above, there is a reduction in delamination of a molded article as determined by Dynatup impact testing and an increase in impact resistance as determined by Izod impact testing.

Various other additives may be included in the compositions of this invention, their utility being, of course, dependent in part on the contemplated end use for the compositions. Non-limiting examples of these additives include reinforcing agents or fillers such as fibrous glass, graphite whiskers, titanium dioxide, silica, glass fiber, silicon carbide whiskers, carbon fibers, clay, talc, mica and the calcium carbonate; antioxidants; mold release agents; pigments; dyes; heat stabilizers; light stabilizers; processing stabilizers; abrasion resistance compounds; and the like, as well as flame retardants and/or plasticizers. These additives are usually included in effective amounts of between about 1 part and 50 parts by weight of the total composition.

When employing a flame retardant such as a triaryl phosphate mixture with alkylated derivatives (71-B), the flame retardant can be reduced by the amount of phosphite additive of this invention and may retain good flame retardant properties.

The compositions of the invention may be prepared by conventional blending techniques such as by melt-blending the ingredients. In a preferred process, some of the ingredients are combined separately as pre-mix blends and then melt blended and extruded from a single or twin screw extruder. For example, the polyphenylene ether composition of this invention may be melt blended and then the blend may be extruded into a processable form. The processable form can then be injection molded or compression molded.

In another preferred process, the ingredients, including optional ingredients, are first preblended together. The preblended composition is then melt extruded from a single or twin screw extruder. The extrudate may then be cooled (water quench for example) and then pelletized. The pellets or granules can then be injection molded.

The following examples are provided to illustrate various embodiments of this invention. They are for the purpose of illustration only, and should not be regarded as limiting the invention to any of the specific materials or conditions described therein.

### EXAMPLE 1

The materials employed in the Examples as component parts were as follows:

Polyphenylene ether (PPE) - Poly (2,6-dimethyl-1,4- phenylene) ether, having an intrinsic viscosity as set forth in the Tables and determined as deciliters per gram (dl/g) as measured in chloroform at 25°C.

KRATON®KD1101 - Linear styrene-(butadiene)-styrene triblock elastomeric copolymer, available from Shell Chemical Company, having a total average molecular weight of about 92,000, with each styrene block having an average molecular weight of about 14,000 and the polybutadiene block having an average molecular weight of about 64,000.

Flame Retardant (71-B) - Mixture of tri(aryl) phosphate and alkylated derivatives thereof as described in U.S. Patent 4,945,018.

Polyolefin PE (MN-722) - A low density polyethylene.

Polyolefin LLDPE - A linear low density polyethylene.

Weston TDP - tridecyl phosphite (GE Specialty Chemicals, Inc.).

Ultranox 626 - bis(2,4 di-t-butylphenyl) pentaery- thritol diphosphite (GE Specialty Chemicals, Inc.).

Weston DPDP - diphenylisodecyl phosphite (GE Specialty Chemicals, Inc.).

Weston TSP - tristearyl phosphite (GE Specialty Chemicals, Inc.).

Weston TPP - triphenyl phosphite (GE Specialty Chemicals, Inc.).

Where reported, the following physical test procedures were carried out:

Dynatup Impact Testing - Test procedure in accordance with ASTM test procedure D-3763-86 using Dynatup impact testing equipment by General Research Instruments using a molded simple about 4" in diameter by 1/8" thick.

Izod Impact Testing - Test procedure for measuring notched Izod impact in accordance with ASTM test procedure D256 using 1/8" thick test specimens.

In each Example, as reported in the table below, the component parts were first dry blended for about 30 seconds in a laboratory blender. Each blend was separately extruded in a Werner-Pfleiderer 30mm twin screw extruder at about 275°C. The melt blended extrudate of each Example was quenched in water at room temperature and then pelletized.

The pelletized samples of each Example were then dried in an air circulating at about 125°C for about 4 hours. The samples were then injection molded at about 240°C into the respective test specimens for Dynatup impact and Izod impact testing as described above.

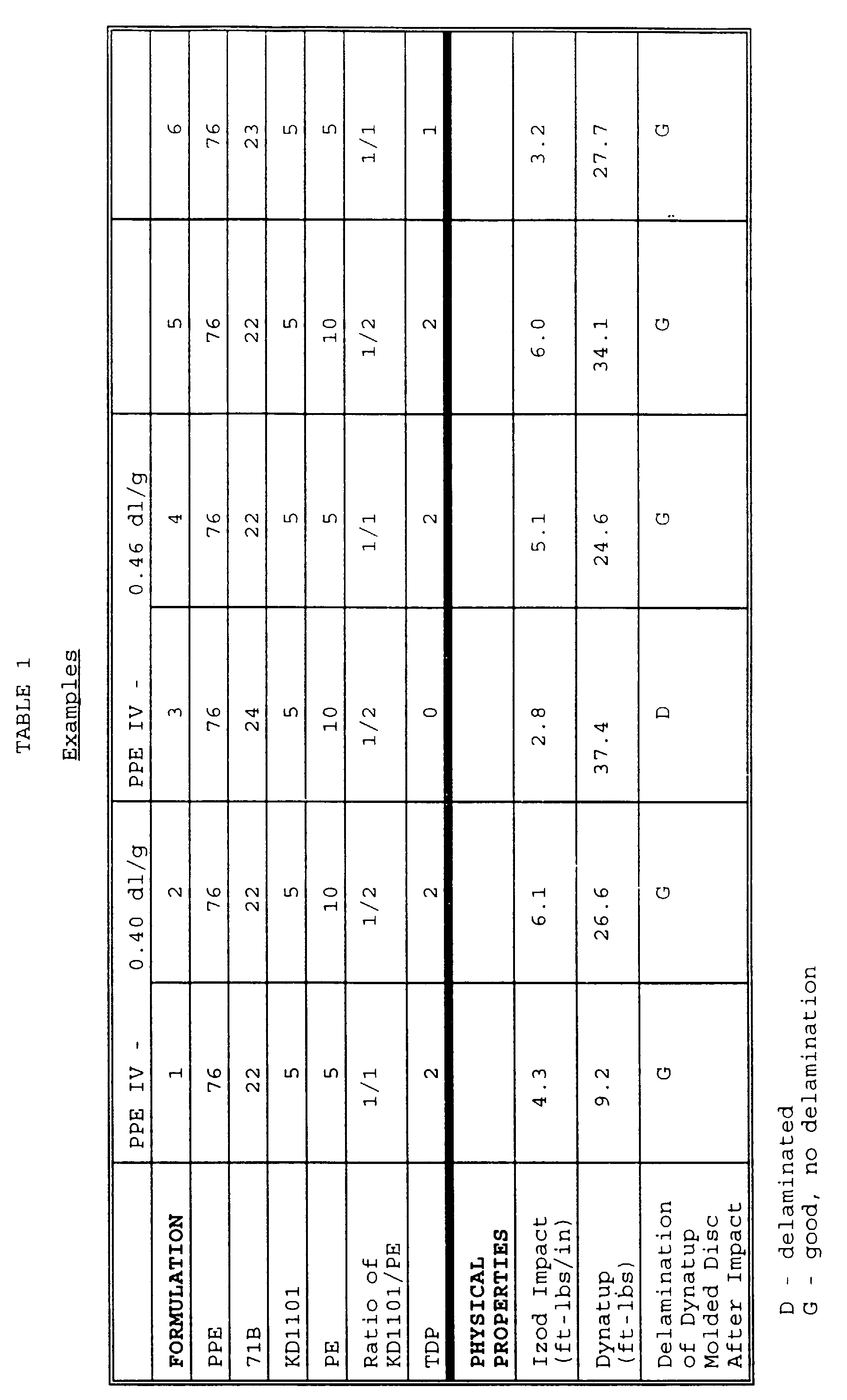

**TABLE 2**

| Examples | | | | | | |
|---|---|---|---|---|---|---|
| **FORMULATION** | 7 | 8 | 9 | 10 | 11 | 12 |
| PPE (IV 0.46 dl/g) | 76 | 76 | 76 | 76 | 76 | 76 |
| 71B | 22 | 22 | 22 | 22 | 22 | 22 |
| KD1101 | 5 | 5 | 5 | 5 | 5 | 5 |
| LDPE | 10 | 10 | 10 | 10 | 10 | 10 |
| Ratio of KD1101/LDPE | 1/2 | 1/2 | 1/2 | 1/2 | 1/2 | 1/2 |
| Weston TDP | | 2 | | | | |
| Ultranox 626 | | | 2 | | | |
| Weston DPDP | | | | 2 | | |
| Weston TSP | | | | | 2 | |
| Weston TPP | | | | | | 2 |

| **PHYSICAL PROPERTIES** | | | | | | |
|---|---|---|---|---|---|---|
| Izod Impact (ft-lbs/in) | 2.5 | 6.3 | 4.9 | 5.4 | 4.6 | 4.2 |
| Dynatup (ft-lbs) | 24.9 | 30.6 | 28.9 | 27.2 | 25.5 | 33.5 |
| Delamination of Dynatup Molded Disc After Impact | D | G | G | G | G | D |

| | | | | | | |
|---|---|---|---|---|---|---|
| D - delamination | | | | | | |
| G - good, no delamination | | | | | | |

As can be seen from the Examples, when employing the particular amount of phosphite of this invention with the unsaturated block copolymer, the polyolefin and the PPE, as little as 1 part of the phosphite results in improved delamination resistance. Please note Example 6 in Table 1. Also note that with the phosphite of this invention, increased impact resistance is obtained. Please note Examples 1, 2, 4, 5 and 6 compared to Example 3 with no phosphite.

## Claims

1. Rigid moldable thermoplastic resin compositions having improved resistance to delamination upon impact and improved resistance to impact comprising in admixture polyphenylene ether resins, polyolefins, non-hydrogenated block copolymers and an amount of phosphites sufficient to improve resistance to delamination upon impact and to improve impact resistance, which phosphites are selected from the group consisting of tridecyl phosphite, diphenylisodecyl phosphite, tristearyl phosphite, bis (2,4 di-t-butylphenyl) pentaerythritol diphosphite and mixtures thereof.

2. The composition of claim 1 wherein the composition comprises 60 to about 85 parts of PPE, 1 to about 30 parts of polyolefin, 5 to about 20 parts of non-hydrogenated block copolymer and 1 to about 15 parts of the phosphite, all parts being based on the total weight of the composition without reinforcing agent and fillers.

3. The composition of claim 2 wherein the phosphite is tridecyl phosphite.

4. The composition of claim 2 wherein the polyolefin is a low density polyethylene.

5. The composition of claim 2 wherein the non-hydrogenated block copolymer is polystyrene-polybutadiene-polystyrene.

6. The composition of claim 2 having further in admixture therewith 10 to about 25 parts by weight of a flame retardant.

7. The composition of claim 6 wherein the flame retardant is a phosphate.

8. A rigid moldable thermoplastic resin composition having improved resistance to delamination upon impact and improved impact resistance consisting essentially of in admixture 60 to about 85 parts by weight of a PPE, 1 to about 30 parts by weight of a polyolefin, 5 to about 20 parts by weight of a non-hydrogenated elastomeric block copolymer, and 1 to about 15 parts by weight of a phosphite selected from the group consisting of tridecyl phosphite, dipheylisodecyl phosphite, tristearyl phosphite and mixtures thereof, all parts being based on the total weight of the composition without reinforcing agents and fillers.
